# EUROPEAN PATENT APPLICATION

(11) **EP 3 190 429 A1**
(43) Date of publication of application: **12.07.2017**
(21) Application number: 16750081.8
(22) Date of filing: 07.07.2016
(51) Int. Cl.: G01S 19/25, G01S 19/27, G01S 19/05

(54) **METHOD AND DEVICE FOR HYBRID POSITIONING BASED ON V2X AND GNSS**

(30) Priority: 19.11.2015 CN 201510802245
(71) Applicant: LE Holdings (Beijing) Co., Ltd., Beijing 100025 (CN); Leauto Intelligent Technology (BEIJING) Co. Ltd, Beijing 100025 (CN); Leauto Intelligent Technology (BEIJING) Co. Ltd, Beijing 100025 (CN)
(72) Inventor: XU, Yong, Chaoyang District Beijing 100025 (CN); LIN, Wei, Chaoyang District Beijing 100025 (CN); LIU, Peng, Chaoyang District Beijing 100025 (CN); LI, Wenrui, Chaoyang District Beijing 100025 (CN); CHEN, Kunsheng, Chaoyang District Beijing 100025 (CN)
(74) Representative: Manitz Finsterwald Patentanwälte PartmbB
(86) International application number: PCT/CN2016/089100
(87) International publication number: WO 2017/084361

(57) **Abstract**

An embodiment of the present disclosure discloses a mixed positioning method based on V2X and GNSS and the device thereof. The method includes: receiving position information or short-acting ephemeris information from a V2X base station; when receiving the position information, determining current ephemeris information of location of the V2X base station according to the position information and current time information; updating ephemeris information inside a GNSS positioning receiver via the current ephemeris information, and using the updated ephemeris information to lock satellite to perform positioning; when receiving the short-acting ephemeris information, updating ephemeris information inside a GNSS positioning receiver via the short-acting ephemeris information, and using the updated ephemeris information to lock satellite to perform positioning. The V2X technology and GNSS technology are combined to be used in mobile vehicle wireless positioning scene, improves speed of updating short-acting ephemeris, and is independent from mobile communication network and enormous and complex ephemeris algorithm, which saves positioning time and data traffic charge, improves the positioning performance.

## Description

### CROSS-REFERENCE TO RELATED APPLICATIONS

The present disclosure is based upon and claims priority to Chinese Patent Application No. CN201510802245.0, filed November 19, 2015, the entire contents of all of which are incorporated herein by reference.

### FIELD OF TECHNOLOGY

The present disclosure generally relates to the field of satellite positioning, and more particularly, to a mixed positioning method based on vehicle to exterior X information interact (V2X) and GNSS and the device thereof.

### BACKGROUND

Global navigation satellite system (GNSS) generally refers to all of satellite navigation systems, including global satellite navigation systems, regional satellite navigation systems and enhanced satellite navigation systems. The current GNSS has American "Global Positioning System (GPS)", Russian "Glonass", European "Galileo", and Chinese "Beidou satellite navigation system". Beidou satellite navigation system is a satellite navigation system with independent intellectual property rights owned by China, which has the characteristics of bidirectional communication, so it has apparent developing advancement.

The operating principle of different GNSS is basically the same. Put simply, for any GNSS receiver, after receiving signals from three satellites, it will be able to determine the position coordinates of the receiver on the earth's surface. But because there are temporal errors between the atomic clock on the satellite and the ground, the additional fourth satellites revises the precision. Therefore, when a GNSS receiver is able to receive signals from four satellites, it is capable of achieving precise positioning totally.

At present, vehicle-mounted terminal apparatus (such as the On-Board Diagnostic (OBD) apparatus, the Telematics BOX (T-Box) and the vehicle data recorder) all are equipped with GNSS modules, which are used to obtain the position information of vehicles. All illustrations for the GNSS receiver in the following paragraphs will take GNSS receivers for examples.

After a cold start, since there is no data in its interior, GPS receiver begins to search the signal of GPS satellites, analyze the frequency, number, and running track of every satellite sending signals overhead currently step by step, and eventually lock the satellite. This process is called compiling the ephemeris. After that, GPS receiver is able to position itself. Thus the process of location is very slow, and usually takes more than ten minutes to twenty minutes in the open field. Once the GPS receiver successfully locates the position, it will keep retaining/updating the following data in the receiver chip memory of GPS receiver all the time.
1. The latitude and longitude (a regional value) of the last position;
2. The number and trajectory of satellites over the location in the last position, and the position of these satellites within four hours by prediction. Because the term of validity is only four hours, it is also known as short-acting ephemeris.

For a vehicle, if the engine stops for more than four hours, when starts again it needs to re-search the satellites, and the time required for location is still up to several minutes.

Aiming at the problems of the expiring of GPS ephemeris, some new styles of Assisted GPS (A-GPS) algorithms develop rapidly, the basic ideas of which all are to rewrite ephemerides in the interior of GPS receiver. By rewriting the ephemeris, and omitting the process of searching for satellites, GPS receiver is able to locate the position more quickly.

Conventional A-GPS algorithm is able to download ephemeris through the mobile communication network, such as ephemeris download methods based on 2G/3G/4G. In this situation, it needs to use mobile communication networks, and accordingly generating certain network data traffic, besides, the speed of the mobile communication network also affects the ephemeris download speed.

### SUMMARY

An embodiment of the present disclosure discloses a mixed positioning method based on V2X and GNSS and the device thereof, in order to solve the problem that it is highly required to mobile communication network and high costed when downloading ephemeris via mobile communication network.

According to an aspect of the present disclosure, an embodiment of the present disclosure discloses a mixed positioning method based on V2X and GNSS, including:
receiving position information or short-acting ephemeris information from a V2X base station;
when receiving the position information, determining current ephemeris information of location of the V2X base station according to the position information and current time information; updating ephemeris information inside a GNSS positioning receiver via the current ephemeris information, and using the updated ephemeris information to lock satellite to perform positioning;
when receiving the short-acting ephemeris information, updating ephemeris information inside a GNSS positioning receiver via the short-acting ephemeris information, and using the updated ephemeris information to lock satellite to perform positioning.

Correspondingly, according to an aspect of the present disclosure, an embodiment of the present disclosure further discloses a mixed positioning device based on V2X and GNSS, including:
a V2X communication module, configured to receive position information or short-acting ephemeris information from a V2X base station;
an ephemeris information determining module, configured to determine current ephemeris information of location of the V2X base station according to the position information and current time information when the V2X communication module receives the position information;
an ephemeris information updating module, configured to update ephemeris information inside a GNSS positioning receiver via the short-acting ephemeris information when the V2X communication module receives the short-acting ephemeris information; wherein when the ephemeris information determining module determines to obtains the current ephemeris information, the ephemeris information updating module updates the ephemeris information inside the GNSS positioning receiver via the current ephemeris information;
a positioning module, configured to using updated ephemeris information to lock satellite to perform positioning.

According to still another aspect of the present disclosure, there is provided a computer program including computer readable code, when the computer readable code is executed on a positioning device, the positioning device executes the mixed positioning method based on V2X and GNSS.

According to yet another aspect of the present disclosure, there is provided a computer readable medium which stores the computer program above.

The disclosure has beneficial effect of:
In the mixed positioning method based on V2X and GNSS and the device thereof, the V2X technology and GNSS technology are combined together to be used in mobile vehicle wireless positioning situation, and may communicate with V2X base station mounted in road or parking lot. Since the V2X base station is road infrastructure, which has stable physical position, as a result, V2X base station may prestore position information of itself and may also be equipped with short-acting ephemeris information. after receiving the position information of itself sent by the V2X base station or the short-acting ephemeris information, it is capable of further determining the current ephemeris information where the V2X base station located according to the position information and the current time, using the current ephemeris information to update the short-acting ephemeris in the GNSS receiver, or directly use the short-acting ephemeris sent by the V2X base station to update the short-acting ephemeris in the GNSS receiver, and then use the updated short-acting ephemeris to lock the satellite in the space to position. Due to the technology of communicating with the V2X base station, obtaining the position information, according to the characteristic of V2X, it is capable of increasing the speed of updating the short-acting ephemeris, and is independent from mobile communication network and enormous and complex ephemeris algorithm, which saves positioning time and data traffic charge, improves the positioning performance.

The above description is only a summary of the technical scheme of the present disclosure. In order to clearly illustrate the technical means of the present disclosure to ensure the present disclosure is implementable according to content of the specification, and in order to make the above and other purposes, characteristics and advantages of the present disclosure more apparent to understand, embodiments of the present disclosure are specifically illustrated as follows.

### BRIEF DESCRIPTION OF THE DRAWINGS

In order to more apparently describe the technical schemes in the embodiments of the disclosure or in the prior art, accompanying figures necessarily used in the description of the embodiments or the prior art will be simply explained hereinafter. Obviously, the accompanying figures described below will form the embodiments of the disclosure. An ordinary person skilled in the art may conceive further figures in accordance with these accompanying figures without contributing creative labor.
FIG. 1 is a flow chart showing steps of mixed positioning method based on V2X and GNSS according to a first embodiment of the present disclosure.
FIG. 2 is a flow chart showing steps of mixed positioning method based on V2X and GNSS according to a second embodiment of the present disclosure.
FIG. 3 is a schematic diagram showing the structure of mixed positioning device based on V2X and GNSS according to a third embodiment of the present disclosure.
FIG. 4 is a schematic diagram showing the structure of mixed positioning device based on V2X and GNSS according to a fourth embodiment of the present disclosure.
FIG. 5 schematically illustrates a block diagram of a mobile terminal used to execute the method according to the present disclosure; and
FIG. 6 schematically illustrates a storage cell used to keep or carry a program code for realizing the method according to the present disclosure.

### DESCRIPTION OF THE EMBODIMENTS

In order that objectives, technical schemes and advantages of the embodiments of the disclosure become more apparent, the technical schemes in the embodiments of the disclosure will be thoroughly and completely described below in conjunction with the accompanying figures in the embodiments of the disclosure. It is obvious that the embodiments described herein are some of embodiments of the disclosure rather than entire embodiments. On the basis of the embodiments of the disclosure, other embodiments conceived by an ordinary person skilled in the art without creative labor would all fall into the protection scope of the disclosure.

V2X technology is an emerging vehicle mounted communication technology, whose basic technical principle is in accordance with IEEE802.11p communication protocol. V2X technology is applied to vehicle electrics and vehicle mounted communication. Compared with conventional vehicle mounted technology (2G/3G/4G communication technology based on mobile communication network), V2X technology has characteristics as below:
1. Being used in high-speed scene, the vehicle driving speed can reach 180Km/h;
2. Having wide coverage, being independent from range of visibility of base station, the broadcast distance may reach 3000m;
3. Having simplified communication mechanism, adapted to variable commutation environment, without complex certification, association and data confidentiality service.
4. Without the need of communication data traffic cost.

In the embodiment of the present disclosure, the V2X technology is combined with conventional GNSS technology, for realizing vehicle positioning. Using V2X technology to determine ephemeris information requires the use of V2X communication module and V2X base station, compared with obtaining the ephemeris information via communication technology based on the mobile communication network, it is capable of accelerating the speed of determining the ephemeris information. In addition, the apparatus in the communication technology based on the mobile communication network has totally different principle from the apparatus related to the V2X, it is uneasy for a skilled person in the art to combine the V2X technology with GNSS technology to perform positioning.

The embodiments in the present disclosure may be described progressively, each embodiment mainly illustrates the difference compared with other embodiments, and the similar parts thereof may be referred to each other.

### First embodiment

A mixed positioning method based on V2X and GNSS in the first embodiment of the present disclosure is described specifically. The first embodiment of the present disclosure discloses a mixed positioning method based on V2X and GNSS, which may be used in a positioning device, the positioning device may determine ephemeris information via V2X technology and is mounted on a vehicle for vehicle positioning.

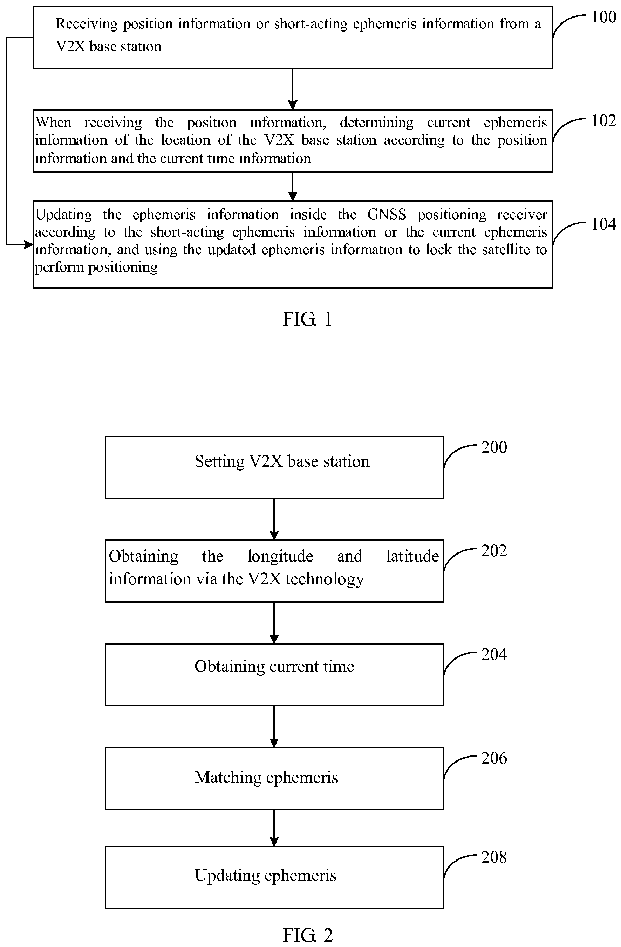

Referring to FIG. 1, it is a flow chart showing the steps of mixed positioning method based on V2X and GNSS according to a first embodiment of the present disclosure.

Step 100, receiving position information or short-acting ephemeris information from a V2X base station.

The V2X base station belongs to road infrastructure which has stable physical position, thusly the V2X base station may prestore position information of itself and may also be disposed with short-acting ephemeris information. In the embodiment of the present disclosure, the V2X base station may be used as auxiliary positioning information source, the position information prestored therein may be used as longitude and latitude information.

In a preferred embodiment of the present disclosure, the short-acting ephemeris information broadcasted out from the V2X base station may be updated dynamically according to current time and predetermined ephemeris table.

Step 102, when receiving the position information, determining current ephemeris information of the location of the V2X base station according to the position information and the current time information.

In a preferred embodiment of the present disclosure, it is capable of matching the current ephemeris information of the location of the V2X base station with predetermined ephemeris information and obtaining the current ephemeris information of the location of the V2X base station from the predetermined ephemeris information according to the position information and the current time information.

Wherein a long-acting ephemeris storage may be one component of the mixed positioning device based on V2X and GNSS, and it stores the predetermined ephemeris information. The current time information may come from another component, that is a real-time clock module in the mixed positioning device based on V2X and GNSS.

Step 104, updating the ephemeris information inside the GNSS positioning receiver according to the short-acting ephemeris information or the current ephemeris information, and using the updated ephemeris information to lock the satellite to perform positioning.

If the short-acting ephemeris information from the V2X base station is received in step 100, it is capable of performing step 104 directly; if the position information from the V2X base station is received in step 100, it is required to perform step 104 after performing step 102.

The GNSS positioning receiver is located in the mixed positioning device based on V2X and GNSS, the GNSS positioning receiver stores a short-acting ephemeris of the mixed positioning device.

Concretely, it is capable of updating the short-acting ephemeris in the GNSS positioning receiver via the short-acting ephemeris information in step 100, that is the short-acting ephemeris information in the broadcast of the V2X base station, or the current ephemeris information determined in step 102.

The embodiment of the present disclosure may be summarized into two technical solutions:

### First technical solution

After the GNSS positioning receiver starts, it communicates with nearby V2X base station. Since the V2X base station belongs to road infrastructure, and has stable physical positon, the V2X base station may prestore longitude and latitude information of itself. The V2X base station broadcasts the longitude and latitude information of itself out, and inputs the longitude and latitude information of the V2X base station and the current time information in the long-acting ephemeris storage, sends the matched and obtained ephemeris to the GNSS positioning receiver, and accelerates the positioning process of the GNSS positioning receiver.

### Second technical solution

After the GNSS positioning receiver starts, it communicates with nearby V2X base station. The V2X base station is disposed with current time and short-acting ephemeris of the current position in the interior thereof, and may directly broadcast the short-acting ephemeris to nearby GNSS positioning receiver, and accelerate the positioning process of the GNSS positioning receiver.

To sum up, in the technical solution in the embodiment of the present disclosure, the V2X technology and the GNSS technology are combined together to be used to the scene of mobile vehicle wireless positioning, and may communicate with V2X base stations mounted in roads or parking lots. Since the V2X base station is road infrastructure, which has stable physical position, the V2X base station may prestore position information of itself and may also be equipped with short-acting ephemeris information. After receiving the position information of the V2X base station sent by the V2X base station or the short-acting ephemeris information, it is capable of further determining the current ephemeris information of the location of the V2X base station according to the position information and the current time, using the current ephemeris information to update the short-acting ephemeris in the GNSS receiver, or directly using the short-acting ephemeris sent by the V2X base station to update the short-acting ephemeris in the GNSS receiver, and then using the updated short-acting ephemeris to lock the satellite in the space to perform positioning. Due to the technology of communicating with the V2X base station, obtaining the position information, according to the characteristic of V2X technology, it is capable of increasing the speed of updating the short-acting ephemeris, and is independent from mobile communication network and enormous and complex ephemeris algorithm, which saves positioning time and data traffic charge, improves the positioning performance.

### The second embodiment

A mixed positioning method based on V2X and GNSS in the second embodiment of the present disclosure is described specifically. The second embodiment of the present disclosure discloses a mixed positioning method based on V2X and GNSS, which may be used in a positioning system, the positioning system determines the ephemeris information via V2X technology, it includes a positioning device and a V2X base station, the positioning device is mounted on a vehicle for vehicle positioning.

Referring to FIG. 2, it is a flow chart showing the steps of mixed positioning method based on V2X and GNSS according to a second embodiment of the present disclosure.

Step 200, setting V2X base station.

Mounting V2X base stations on the roads and parking lots, the communication protocol if the base station is 802.11p. In the covering range of each V2X base station, the V2X base station may perform bidirectional communication with the GNSS positioning receiver and transmit data. To the positioning function described in the embodiment of the present disclosure, the V2X base station may broadcast the longitude and latitude of its location, and also broadcast the current time and the short-acting ephemeris of its location. The information may be set via base station software after the V2X base station is set, and used as auxiliary positioning information source.

The short-acting ephemeris broadcasted from the V2X base station is updated dynamically according to the current time and ephemeris table predetermined inside the V2X base station.

Step 202, obtaining the longitude and latitude information via the V2X technology.

It is capable of obtaining the longitude and latitude information of the V2X base station via the V2X communication module in the positioning device, and transmitting the longitude and latitude information to a central processing unit (CPU) of the positioning device.

Step 204, obtaining the current time.

The CPU obtains the current real-time clock information from the real-time clock module of the positioning device at the same time.

Step 206, matching the ephemeris.

The CPU matches and obtains the current ephemeris of the location of the V2X base station from the long-acting ephemeris storage according to the current time and longitude and latitude information.

Step 208, updating the ephemeris.

A central controlling unit (CCU) replaces the short-acting ephemeris of the GNSS positioning receiver by the ephemeris obtained in step 206. The GNSS positioning receiver locks four satellites in the space according to the updated ephemeris to perform positioning.

To sum up, in the technical solution in the embodiment of the present disclosure, the V2X technology and the GNSS technology are combined together to be used to the scene of mobile vehicle wireless positioning, and may communicate with V2X base stations mounted in roads or parking lots. Since the V2X base station is road infrastructure, which has stable physical position, the V2X base station may prestore position information of itself and may also be equipped with short-acting ephemeris information. After receiving the position information of the V2X base station sent by the V2X base station or the short-acting ephemeris information, it is capable of further determining the current ephemeris information of the location of the V2X base station according to the position information and the current time, using the current ephemeris information to update the short-acting ephemeris in the GNSS receiver, or directly using the short-acting ephemeris sent by the V2X base station to update the short-acting ephemeris in the GNSS receiver, and then using the updated short-acting ephemeris to lock the satellite in the space to perform positioning. Due to the technology of communicating with the V2X base station, obtaining the position information, according to the characteristic of V2X technology, it is capable of increasing the speed of updating the short-acting ephemeris, and is independent from mobile communication network and enormous and complex ephemeris algorithm, which saves positioning time and data traffic charge, improves the positioning performance.

### The third embodiment

A mixed positioning device based on V2X and GNSS in the third embodiment of the present disclosure is described specifically.

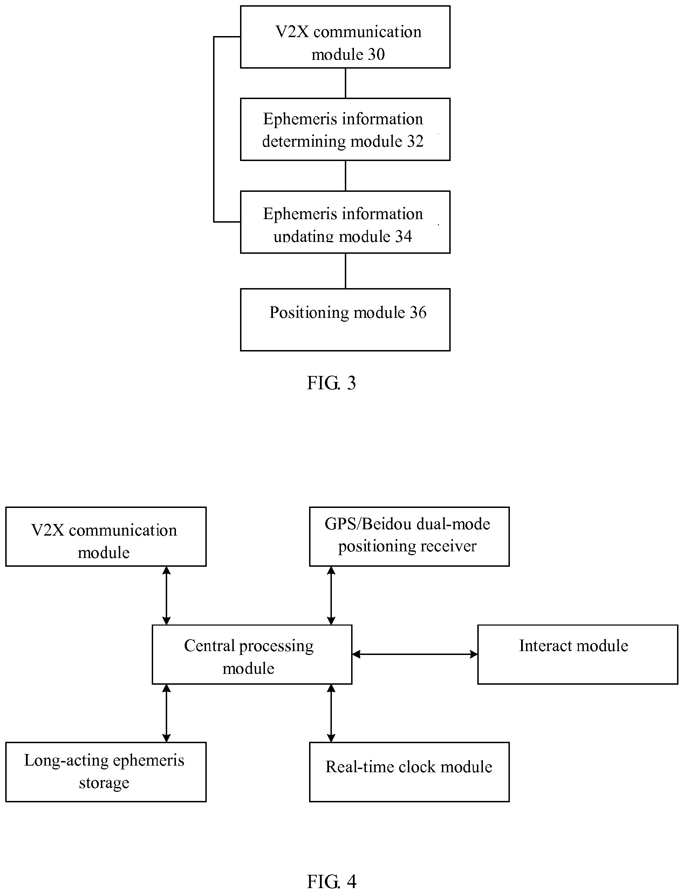

Referring to FIG. 3, it is a schematic diagram showing the structure of mixed positioning device based on V2X and GNSS according to a third embodiment of the present disclosure.

The device may include: a V2X communication module 30, an ephemeris information determining module 32, an ephemeris information updating module 34 and a positioning module 36. The V2X communication module 30 may be a communication chip in the positioning device which perform bidirectional communication with the V2X base station using V2X technology, and is a communication component of the positioning device for communicating with outside. The ephemeris information determining module 32 and the ephemeris information updating module 34 may be two controllers of the positioning device, respectively, each of the two controllers may have corresponding algorithm texted to realize the operation or function of the two controllers. The ephemeris information determining module 32 and the ephemeris information updating module 34 may be key points of the embodiment of the present disclosure, the corresponding controllers of the ephemeris information determining module 32 and the ephemeris information updating module 34 may be replaced by CPU or controller in the conventional positioning device to realize the same operation or function. For example, the ephemeris information determining module 32 and the ephemeris information updating module 34 may be replaced by conventional GPS navigator which may perform A-GPS algorithm, to make the ephemeris information determining module 32 determine the current ephemeris information of the location of the V2X base station, make the ephemeris information updating module 34 update the ephemeris information inside the GNSS positioning receiver via the short-acting ephemeris information; the positioning module 36 may be a positioning chip inside the positioning device.

Functions of the modules and relations between the modules are illustrated hereinafter.

The V2X communication module 30 is configured to receive the position information from the V2X base station or short-acting ephemeris information.

Preferably, the short-acting ephemeris information is the ephemeris information inside the V2X base station and updated dynamically according to the current time and predetermined ephemeris table.

The ephemeris information determining module 32 is configured to determine the current ephemeris information of the location of the V2X base station according to the position information and the current time information when the V2X communication module 30 receives the position information.

The ephemeris information updating module 34 is configured to update the ephemeris information inside the GNSS positioning receiver via the short-acting ephemeris information when the V2X communication module 30 receives the short-acting ephemeris information; when the ephemeris information determining module 32 determines to obtain the current ephemeris information, the ephemeris information updating module 34 updates the ephemeris information inside the GNSS positioning receiver via the current ephemeris information.

The positioning module 36 is configured to lock the satellite to perform positioning using the updated ephemeris information.

In a preferred embodiment of the present disclosure, the positioning device may be positioning device mounted inside the vehicle, such as vehicle mounted navigator. The positioning device may include: a V2X communication module, a GPS/Beidou dual-mode positioning receiver, a long-acting ephemeris storage, a real-time clock module, an interact module and a CPU. As shown in FIG. 4, the V2X communication module may be a communication chip in the positioning device performing bidirectional communication with V2X base station using V2X technology, it is a communicating component of the positioning device for communicating with outside, the GPS/Beidou dual-mode positioning receiver may be a GPS/Beidou positioning chip in the positioning device, it is a main component of the positioning device, and used for performing satellite positioning according to the ephemeris information. The long-acting ephemeris storage may be a readable storage chip in the positioning device, the real-time clock module may be a timing chip in the positioning device, configured to display the system time of the positioning device, the interact module may be a user interface intelligent interact chip in the positioning device which performs the human-machine interact function between human and the positioning device. The V2X communication module, the GPS/Beidou dual-mode positioning receiver, the long-acting ephemeris storage, the real-time clock module, and the interact module are connected to CPU of the positioning device and may be managed and dispatched by the CPU.

The V2X communication module is configured to receive the position information from the V2X base station, and transit the position information to the CPU. The position information may include longitude and latitude information.

The real-time clock module is configured to generate the current time information.

The CPU obtains the current time information from the real-time clock module.

The long-acting ephemeris storage is configured to store the predetermined ephemeris information.

The CPU matches and obtains the current ephemeris information of the location of the V2X base station from the predetermined ephemeris information stored in the long-acting ephemeris storage according to the current time and the longitude and latitude information, and uses the current ephemeris information to update the short-acting ephemeris stored in the GPS/Beidou dual-mode positioning receiver.

The GPS/Beidou dual-mode positioning receiver locks at least four satellites in the space to perform positioning by the updated short-acting ephemeris.

The interact module is configured to interact the information such as the positioning information of the device with user; the positioning information includes a position information, current time information and ephemeris information and the like.

The interact module may include human-machine interact interface and communication interface.

To sum up, in the technical solution in the embodiment of the present disclosure, the V2X technology and the GNSS technology are combined together to be used to the scene of mobile vehicle wireless positioning, and may communicate with V2X base stations mounted in roads or parking lots. Since the V2X base station is road infrastructure, which has stable physical position, the V2X base station may prestore position information of itself and may also be equipped with short-acting ephemeris information. After receiving the position information of the V2X base station sent by the V2X base station or the short-acting ephemeris information, it is capable of further determining the current ephemeris information of the location of the V2X base station according to the position information and the current time, using the current ephemeris information to update the short-acting ephemeris in the GNSS receiver, or directly using the short-acting ephemeris sent by the V2X base station to update the short-acting ephemeris in the GNSS receiver, and then using the updated short-acting ephemeris to lock the satellite in the space to perform positioning. Due to the technology of communicating with the V2X base station, obtaining the position information, according to the characteristic of V2X technology, it is capable of increasing the speed of updating the short-acting ephemeris, and is independent from mobile communication network and enormous and complex ephemeris algorithm, which saves positioning time and data traffic charge, improves the positioning performance.

The above embodiments are described merely for a schematic purpose, wherein the units explained as individual members may or may not be physically separated, the members shown as units may or may not be physical units and they can be placed at a position or also can be distributed to network units. As necessary in practice, some or all of the modules can be selected to complete the objectives of the schemes of the embodiments. An ordinary person skilled in the art may understand and implement the embodiments without contributing creative labor.

Each of devices according to the embodiments of the disclosure can be implemented by hardware, or implemented by software modules operating on one or more processors, or implemented by the combination thereof. A person skilled in the art should understand that, in practice, a microprocessor or a digital signal processor (DSP) may be used to realize some or all of the functions of some or all of the modules in the device according to the embodiments of the disclosure. The disclosure may further be implemented as device program (for example, computer program and computer program product) for executing some or all of the methods as described herein. Such program for implementing the disclosure may be stored in the computer readable medium, or have a form of one or more signals. Such a signal may be downloaded from the internet websites, or be provided in carrier, or be provided in other manners.

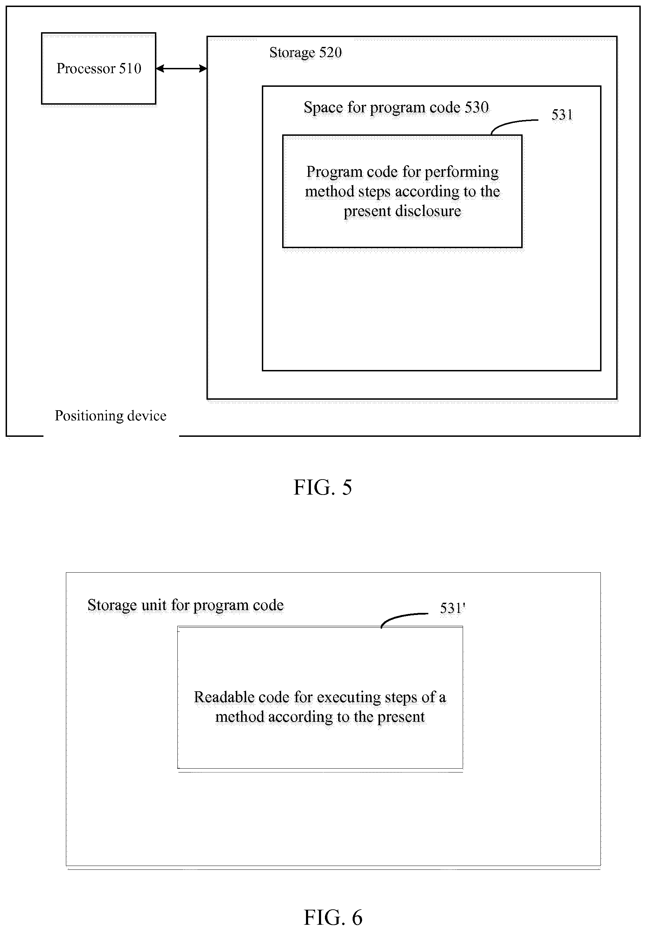

For example, FIG. 5 illustrates a block diagram of a positioning device for executing the method according the disclosure. Traditionally, the positioning device includes a processor 510 and a computer program product or a computer readable medium in form of a memory 520. The memory 520 could be electronic memories such as flash memory, EEPROM (Electrically Erasable Programmable Read - Only Memory), EPROM, hard disk or ROM. The memory 520 has a memory space 530 for executing program codes 531 of any steps in the above methods. For example, the memory space 530 for program codes may include respective program codes 531 for implementing the respective steps in the method as mentioned above. These program codes may be read from and/or be written into one or more computer program products. These computer program products include program code carriers such as hard disk, compact disk (CD), memory card or floppy disk. These computer program products are usually the portable or stable memory cells as shown in reference FIG. 6. The memory cells may be provided with memory sections, memory spaces, etc., similar to the memory 520 of the server as shown in FIG. 5. The program codes may be compressed for example in an appropriate form. Usually, the memory cell includes computer readable codes 531' which can be read for example by processors 510. When these codes are operated on the server, the server may execute respective steps in the method as described above.

The "an embodiment", "embodiments" or "one or more embodiments" mentioned in the disclosure means that the specific features, structures or performances described in combination with the embodiment(s) would be included in at least one embodiment of the disclosure. Moreover, it should be noted that, the wording "in an embodiment" herein may not necessarily refer to the same embodiment.

Many details are discussed in the specification provided herein. However, it should be understood that the embodiments of the disclosure can be implemented without these specific details. In some examples, the well-known methods, structures and technologies are not shown in detail so as to avoid an unclear understanding of the description.

It should be noted that the above-described embodiments are intended to illustrate but not to limit the disclosure, and alternative embodiments can be devised by the person skilled in the art without departing from the scope of claims as appended. In the claims, any reference symbols between brackets form no limit of the claims. The wording "include" does not exclude the presence of elements or steps not listed in a claim. The wording "a" or "an" in front of an element does not exclude the presence of a plurality of such elements. The disclosure may be realized by means of hardware comprising a number of different components and by means of a suitably programmed computer. In the unit claim listing a plurality of devices, some of these devices may be embodied in the same hardware. The wordings "first", "second", and "third", etc. do not denote any order. These wordings can be interpreted as a name.

Also, it should be noticed that the language used in the present specification is chosen for the purpose of readability and teaching, rather than explaining or defining the subject matter of the disclosure. Therefore, it is obvious for an ordinary skilled person in the art that modifications and variations could be made without departing from the scope and spirit of the claims as appended. For the scope of the disclosure, the publication of the inventive disclosure is illustrative rather than restrictive, and the scope of the disclosure is defined by the appended claims.

In the end, it should be explained that aforesaid embodiments are provided for the purpose of illustrating not limiting the technical schemes of the present disclosure. Although the present disclosure has been described in detail with reference to the embodiments, it should be understood that modifications or equivalent substitutions can be made to the technical schemes or some of technical features therein as disclosed in the embodiments by those skilled in the art; the modifications or substitutions will not bring the essence of the respective technical schemes to depart from spirit and scope of the technical schemes of the inventive embodiments.

## Claims

1. A mixed positioning method based on V2X and GNSS, **characterized in that**, the method comprises:
receiving position information or short-acting ephemeris information from a V2X base station;
when receiving the position information, determining current ephemeris information of location of the V2X base station according to the position information and current time information; updating ephemeris information inside a GNSS positioning receiver via the current ephemeris information, and using the updated ephemeris information to lock satellite to perform positioning;
when receiving the short-acting ephemeris information, updating ephemeris information inside a GNSS positioning receiver via the short-acting ephemeris information, and using the updated ephemeris information to lock satellite to perform positioning.

2. The method according to claim 1, **characterized in that**, determining the current ephemeris information of the location of the V2X base station according to the position information and the current time information comprises:
matching and obtaining the current ephemeris information of the location of the V2X base station from predetermined ephemeris information according to the position information and the current time information.

3. The method according to claim 1, **characterized in that**, the short-acting ephemeris information is ephemeris information located inside the V2X base station and updated dynamically according to the current time and predetermined ephemeris table.

4. The method according to claim 1, **characterized in that**, the position information comprises longitude and latitude information.

5. A mixed positioning device based on V2X and GNSS, **characterized in that**,n the device comprises:
a V2X communication module, configured to receive position information or short-acting ephemeris information from a V2X base station;
an ephemeris information determining module, configured to determine current ephemeris information of location of the V2X base station according to the position information and current time information when the V2X communication module receives the position information;
an ephemeris information updating module, configured to update ephemeris information inside a GNSS positioning receiver via the short-acting ephemeris information when the V2X communication module receives the short-acting ephemeris information; wherein when the ephemeris information determining module determines to obtains the current ephemeris information, the ephemeris information updating module updates the ephemeris information inside the GNSS positioning receiver via the current ephemeris information;
a positioning module, configured to using updated ephemeris information to lock satellite to perform positioning.

6. The device according to claim 5, **characterized in that**, the device comprises:
a long-acting ephemeris storage, configured to store predetermined ephemeris information;
the ephemeris information determining module is configured to match and obtain the current ephemeris information of the location of the V2X base station by predetermined ephemeris information stored in the long-acting ephemeris storage according to the position information and the current time information.

7. The device according to claim 5, **characterized in that**, the short-acting ephemeris information is ephemeris information updated dynamically according to the current time and predetermined ephemeris table inside the V2X base station.

8. The device according to claim 5, **characterized in that**, the device further comprises:
a real-time clock module, configured to generate current time information.

9. The device according to claim 5, **characterized in that**, the device further comprises:
an interact module, configured to interact positioning information of the device and user;
wherein the positioning information comprises position information, current time information and ephemeris information.

10. The device according to claim 5, **characterized in that**, the position information comprises longitude and latitude information.

11. A computer program, **characterized in that**, the computer program comprises a computer readable code, the computer readable code causes a positioning device to execute the mixed positioning method based on V2X and GNSS according to any of claims 1-4 when operating on the positioning device.

12. A computer readable medium, in which the computer readable program according to claim 11 is stored.
